(19) Europäisches Patentamt
European Patent Office
Office européen des brevets

(11) **EP 1 305 836 B1**

(12) **EUROPEAN PATENT SPECIFICATION**

(45) Date of publication and mention
of the grant of the patent:
**24.11.2004 Bulletin 2004/48**

(51) Int Cl.[7]: **H01M 8/02**, C25D 11/02,
C25F 3/00

(21) Application number: **01951815.8**

(22) Date of filing: **24.07.2001**

(86) International application number:
**PCT/GB2001/003319**

(87) International publication number:
**WO 2002/013300 (14.02.2002 Gazette 2002/07)**

(54) **STAINLESS STEEL SUBSTRATE TREATMENT**

BEHANDLUNG EINES SUBSTRATES AUS NICHTROSTENDEM STAHL

TRAITEMENT DE SUBSTRAT EN ACIER INOXYDABLE

(84) Designated Contracting States:
**AT BE CH CY DE DK ES FI FR GB GR IE IT LI LU MC NL PT SE TR**

(30) Priority: **05.08.2000 GB 0019154**
**15.08.2000 US 225391 P**

(43) Date of publication of application:
**02.05.2003 Bulletin 2003/18**

(73) Proprietor: **Ineos Chlor Enterprises Limited
Runcorn Cheshire WA7 4JE (DE)**

(72) Inventor: **HODGSON, David, Ronald
Bolton BL5 2RU (GB)**

(74) Representative:
**Collingwood, Anthony Robert et al
Lloyd Wise, McNeight & Lawrence,
Highbank House
Exchange Street
Stockport, Cheshire SK3 0ET (GB)**

(56) References cited:
WO-A-00/22689       DE-A- 19 523 637
US-A- 5 624 769      US-A- 6 030 718

- **DATABASE WPI Section Ch, Week 198742 Derwent Publications Ltd., London, GB; Class M11, AN 1987-294634 XP002151768 & JP 62 205300 A (JAPAN STEEL WORKS LTD), 9 September 1987 (1987-09-09)**
- **PATENT ABSTRACTS OF JAPAN vol. 006, no. 035 (C-093), 3 March 1982 (1982-03-03) & JP 56 153000 A (SANYO VENDING MACH MFG CO LTD), 26 November 1981 (1981-11-26)**
- **PATENT ABSTRACTS OF JAPAN vol. 2000, no. 14, 5 March 2001 (2001-03-05) & JP 2000 328205 A (SUMITOMO METAL IND LTD), 28 November 2000 (2000-11-28)**
- **MAKKUS R C ET AL: "Use of stainless steel for cost competitive bipolar plates in the SPFC" JOURNAL OF POWER SOURCES, ELSEVIER SEQUOIA S.A. LAUSANNE, CH, vol. 86, no. 1-2, March 2000 (2000-03), pages 274-282, XP004194130 ISSN: 0378-7753 cited in the application**
- **KUWARA ET AL: "Separators for solid electrolyte fuel cells" STN CHEMICAL ABSTRAC, XP002131291**
- **DAVIES D P ET AL: "Stainless steel as a bipolar plate material for solid polymer fuel cells" JOURNAL OF POWER SOURCES, ELSEVIER SEQUOIA S.A. LAUSANNE, CH, vol. 86, no. 1-2, March 2000 (2000-03), pages 237-242, XP004194124 ISSN: 0378-7753**

**Description**

This invention relates to substrate treatment, particularly treatment of stainless steel components to be incorporated in electrochemical cells. Although the invention will be described in the context of components for fuel cells, it is to be understood that the invention also finds application in other types of electrochemical cells, for example electrolytic cells as used for organic synthesis of chemicals and for production of chlorine.

A fuel cell is an electrochemical device in which electricity is produced without combustion of fossil fuel. In a fuel cell a fuel, which is typically hydrogen, is oxidised at a fuel electrode (anode) and oxygen, typically from air, is reduced at a cathode to produce an electric current and form byproduct water. An electrolyte is required which is in contact with both electrodes and which may be alkaline or acidic, liquid or solid. Heat and water are the only by-products of the electrochemical reaction in fuel cells wherein the fuel is hydrogen. Accordingly, the use of such cells in power generation offers potential environmental benefits compared with power generation from combustion of fossil fuels or by nuclear activity.

In proton-exchange membrane fuel cells, hereinafter referred to for convenience as "PEM" fuel cells, the electrolyte is a solid polymer membrane which allows transport of protons from the anode to the cathode and is typically based on perfluorosulphonic acid materials. The electrolyte must be maintained in a hydrated form during operation in order to prevent loss of ionic conduction through the electrolyte.

A PEM fuel cell typically comprises two electrodes, an anode and a cathode, separated by a proton-exchange membrane electrolyte. At the anode, hydrogen fuel catalytically dissociates into free electrons and protons. The free electrons are conducted in the form of usable electric current through the external circuit with which the fuel cell is in electrical contact. The protons migrate through the membrane electrolyte to the cathode where they combine with oxygen from the air and electrons from the external circuit to form water and generate heat. Individual fuel cells may be combined into assemblies which are often referred to in the art as stacks to provide the amount of power required.

Electrochemical cells, such as fuel cells, often incorporate stainless steel components where possible for reasons of economy. In a fuel cell stack for instance, separator plates between adjacent fuel cells and/or current collecting end plates may comprise stainless steel. In electrolytical cells as used for example in the generation of chlorine, electrodes of the cell may comprise a stainless steel substrate.

An important factor in securing good cell efficiency is the interfacial resistance between the surfaces of stainless steel substrates and the surfaces of other components to which the steel substrates are directly or indirectly electroconductively coupled.

While the use of metal plates in fuel cells is seen as having many advantages over other materials, there are concerns over the issue of corrosion which can lead to increased cell resistances. Makkus et al (J. Power Sources, 86 (2000) 274) for instance has reported that the anode side of the fuel cell (i.e. the hydrogen side) containing stainless bipolar plates, gives rise to a greater corrosion of the plate than the cathode (i.e. air ) side. Makkus et al also refers to metal passivation resulting in increased electrical as well as corrosion resistance.

The present invention seeks to secure improvements in efficiency of operation of electrochemical cells, particularly fuel cells. According to one aspect of the present invention there is provided a method of manufacturing an electrochemical cell assembly or fuel cell stack in which at least one component which is exposed to the chemical environment during operation of the cell comprises a stainless steel component, said method comprising treating a surface of the stainless steel, prior to incorporation in the assembly or stack, with an electrical current while contacted by an electrolyte under conditions which reduce the interfacial resistance associated with said surface by a factor of at least 5% compared with the interfacial resistance prevailing prior to said treatment, and incorporating the so-treated stainless steel component in an electrochemical assembly or a fuel cell stack.

The treatment is typically carried out with the stainless steel as the anode (anodic treatment) using dc current.

A feature of the invention is that it is possible to use a relatively inexpensive stainless steel. We have surprisingly found that it is possible to reduce the interfacial resistance associated with such a stainless steel by a process which would normally be expected to increase it. Conventional wisdom leads to an expectation that subjecting a stainless steel surface to anodic treatment would normally result in the growth of oxides on the surface and hence result in an increased interfacial resistance.

In this specification, interfacial resistance is measured by the method as described hereinbelow.

Reduction in interfacial resistance may be obtained by subjecting the stainless steel to an electrical potential or current of substantially constant or variable magnitude. For example, during at least major part of the treatment, the current density or applied voltage may be maintained substantially constant.

The treatment of the stainless steel surface may involve modification of the surface composition of the stainless steel and/or the surface morphology thereof.

The treatment may be such that the ratio of iron content to the chromium within the surface region of the stainless steel is reduced compared with the iron to chromium ratio prevailing prior to such treatment.

Prior to such treatment, the surface or surfaces of the stainless steel may be roughened by physical techniques which are known in the art, e.g. by grit blasting.

The treatment may be applied to two or more surfaces of the stainless steel. The same treatment may be applied at least to each major surface of the stainless steel or the treatment applied to one surface of the stainless steel may be different from that applied to one or more other surfaces of the stainless steel.

The cell assembly may comprise two or more stainless steel components, e.g. plates, treated as aforesaid.

The assembly may include bipolar plates, separator plates, flow field plates and/or current collecting plates, at least one of which comprises stainless steel treated as aforesaid.

The acid(s) present in the electrolyte may be selected from one or more of the group comprising sulphuric acid, hydrochloric acid, nitric acid, chromic acid, oxalic acid and phosphoric acid. The acid may for example be sulphuric acid.

The treatment may be carried out at ambient temperature (e.g. with the electrolyte initially at substantially room temperature). Nevertheless, we do not exclude the possibility of the treatment being carried out out at elevated temperatures. Usually, however, the temperature at least initially will not be greater than about $100°C$, typically not greater than about $90°C$ and more usually not greater than about $70°C$.

The electrolyte may typically have a pH of up to about 6 or less, e.g. less than 5.

The treatment may be such that the interfacial resistance of the stainless steel is reduced by a factor of at least 10% and preferably at least 15%, less than would otherwise prevail in the case of the untreated surface.

Typically said factor is at least 25%, e.g. at least 40% or even at least 50%, less than would otherwise prevail would otherwise prevail in the case of the untreated surface.

The so treated surface of the stainless steel may be coated with an electrically conductive material following treatment to reduce its interfacial resistance, e.g. with a coating of titanium nitride or chromium nitride or an electrocatalytically active material.

Examples of the electrocatalytical coating treatment that may be applied are disclosed in our prior International Patent Application No. WO 00/22689, the entire contents of which are where the context admits incorporated herein by this reference. For example, the electrocatalytically-active material may be selected from the group comprising: one or more platinum group metals or oxides thereof, cerium or or an oxide thereof; ruthenium or an oxide thereof; ruthenium oxide and a non-noble metal oxide; mixtures of $RuO_2$ with at least one of $TiO_2$, $SnO_2$, $IrO_2$, $PtO$, $Sb_2O_3$, $Ta_2O_5$, $PdO$, $CeO_2$, $Co_3O_4$.

The stainless steel is preferably an austenitic stainless steel.

The stainless steel may be a 300 series stainless steel such as 316 or 316L stainless steel.

The treatment may be carried out while the stainless steel is in the form of a sheet, the treated sheet subsequently being divided to form a number of plates for incorporation in one or more electrochemical cell assemblies.

Alternatively, the stainless steel may initially be in the form of a sheet which is then divided to form a number of plates before the treatment is applied to the individual plates.

Fluid flow channels may be formed in the sheet before such division into plates is effected. Alternatively the fluid flow channels may be formed after division has been effected.

The electrochemical cell may comprise a fuel cell, e.g. a PEM fuel cell, an alkaline fuel cell, a phosphoric acid fuel cell, a direct methanol fuel cell, a molten carbonate fuel cell or a solid oxide fuel cell.

According to another aspect of the present invention there is provided a fuel cell stack comprising: a) a plurality of fuel cell units each of which contains a proton-exchange membrane separating the cell into anolyte and catholyte chambers and provided with an anode and a cathode on opposite sides thereof; b) a separator plate, flow field plate or bipolar plate disposed between adjacent cell units; c) current-collecting means comprising a pair of plates located one at each end of the stack; d) means for feeding fuel, e.g. hydrogen or methanol, to the anolyte chambers of the stack; and e) means for feeding an oxygen-containing gas to the catholyte chambers of the stack; at least one of said plates being a stainless steel plate, e.g. a 316 or 316 stainless steel plate, a surface of which has been treated with an electrical current while contacted by an acidic electrolyte under conditions which reduce the interfacial resistance associated with said surface.

The invention will now be described further with reference to the accompanying drawings in which:

Figure 1 illustrates schematically a system for measuring interfacial resistance;

Figure 2 is a graph illustrating the variation of interfacial resistance with loading, obtained using the system of Figure 1, for treated and untreated samples of stainless steel;

Figure 3 is a graphical representation of corrosion potential and corrosion current against treatment time for samples of stainless steel treated at the same current density;

Figure 4 is a graph illustrating the proportions of iron, chromium, nickel and molybdenum constituents present at the surface of an untreated specimen, an untreated and grit blasted specimen, a treated specimen treated in accordance with the invention and the bulk composition, all specimens being composed of the same 316 stainless steel;

Figure 5 is a graphical representation comparing the long term operation of a single cell fuel cell provided with stainless steel plates treated in accordance with the present invention and a corresponding fuel cell provided with untreated plates of the stainless steel;

Figure 6 is a graph illustrating the variation of interfacial resistance with loading, obtained using the system of Figure 1, for a sample of stainless steel treated at constant voltage; and

Figure 7 is a schematic exploded perspective view illustrating by way of example only a fuel cell stack of the ion exchange membrane type with only a limited number of cell units illustrated for simplicity, the stack incorporating stainless steel components which have been treated by a process in accordance with the present invention.

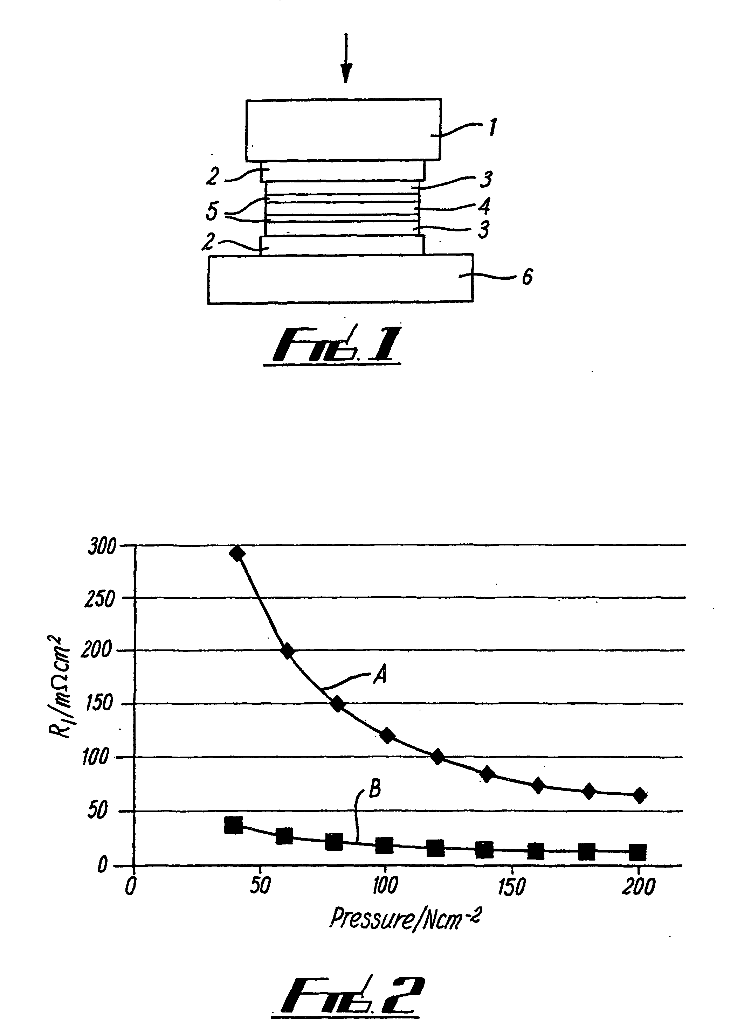

Interfacial resistance as referred to in this specification is measured using the measurement system illustrated in, and the following procedure described with reference to, Figure 1.

Referring to Figure 1, the system comprises of a tensometer (Lloyd Instruments LRX plus, AMETEK Inc.) which is shown in Figure 1 as a fixed press plate 6 and a moveable press plate 1. The stainless steel sample 4 having an area of about 50 x 50 mm is sandwiched between two pieces of carbon diffuser 5 which may comprise for example carbon paper, made by Toray, or Carbel carbon cloth manufactured by W L Gore and Associates. This composite is then sandwiched between two gold plated copper plates 3 (50x50 mm) with the carbon diffuser layers in contact with the gold plated faces. The copper plates 3 have two sets of leads connected to them, one for use in measuring the voltage drop across the plates 3 and the second set for use in passing current through the system. A constant 5 Amps is applied using a Hewlett Packard HP 6008A DC power supply (not shown). The above assembly 3, 4, 5 is isolated from the tensometer itself using two blocks of insulating material 2, for example PTFE. Before the tensometer is operated to apply compressive forces to the assembly, the leads from the gold / copper plates are connected to a voltmeter (e.g.a FLUKE 73 III Multimeter, not shown), and to the Hewlett Packard power supply. The power supply is set to 5Amps and an ammeter (Beckman Industrial T100B) is used to precisely measure the current.

Once the stainless steel sample plate 4 has been prepared and assembled as described above, the tensometer is operated in stepwise fashion to apply increasing pressures ranging from 40 to 200Ncm$^{-2}$. Voltage drops, E, are measured from the voltmeter each time the tensometer reaches a set value stored by the machine. Because this method records the voltage drop over two interfaces, only half the voltage drop is used to calculate the interfacial resistance, $R_I$ using the formula:

$$R_I = (E/2 \times A) / I$$

where I is the applied current (5Amps) and A is the area of overlap between the sample 4 and the carbon diffuser, (typically 25cm$^2$).

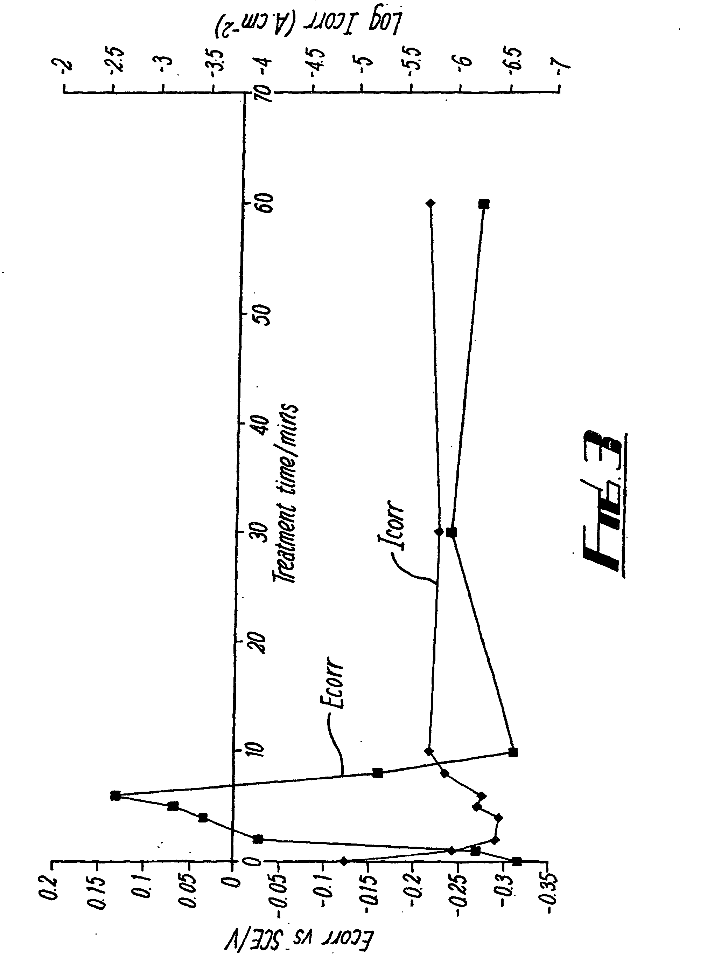

Figure 2 represents a typical plot in which curve B represents the results obtained using a stainless steel plate which has been treated in accordance with the process of the invention. The anodic treatment in this instance involved a current density of 25 mA.cm$^{-2}$ for 30 minutes with the plate immersed in an aqueous electrolyte of 0.5M sulphuric acid, initially at room temperature. Curve A represents results obtained using the system and procedure described above in relation to Figure 1 but with an untreated piece of the stainless steel. From Figure 2, it will be seen that curves A and B approach values for $R_I$ which remain substantially constant at pressures of the order of 200Ncm$^{-2}$ and higher. As used in the specification, interfacial resistance corresponds to the value obtained at a loading of 200Ncm$^{-2}$. It will be observed that the interfacial resistance for the treated sample is significantly less than that for the untreated sample, i.e. about 12 mΩcm$^2$ compared to about 65 mΩcm$^2$.

Typically stainless steel plates to be treated for use in an electrochemical cell in accordance with the invention are subjected to the following treatment steps. The stainless steel workpiece is degreased using a suitable solvent (e. g. acetone, isopropyl alcohol, trichloroethylene, caustic agents etc.) and immersed in a bath of electrolyte. The electrolyte is acid based containing one or more of the following: sulphuric acid, hydrochloric acid, nitric acid, chromic acid, oxalic acid and phosphoric acid. Using appropriate counter electrodes (e.g. platinised Ti), a dc current is passed between the workpiece (as the anode) and the counter electrodes (as the cathode). This current is calculated as a current density and may be from 0.01 mA/cm$^2$ to 500 mA/cm$^2$, preferably in the range 1 to 50 mA/cm$^2$. The current is controlled at the required level for a time between 0.5 and 180 minutes, preferably between 1 and 60 minutes and more preferably between 2 and 7 minutes. At the start of the anodic treatment, the electrolyte is at room temperature (and may increases during the course of the treatment). The particular conditions necessary to secure a reduction in interfacial resistance while maintaining the corrosion resistance properties of the stainless steel substantially unchanged or enhancing the same may be determined experimentally.

The workpiece is removed and rinsed in deionised water or deionised water made slightly alkaline to remove excess acid, and dried, e.g. in air or by passing a warm air current over the workpiece. The workpiece is then installed as a bipolar plate, separator plate, flow field plate and/or a current collecting plate in the electrochemical cell, e.g. a fuel cell.

Optimised conditions appropriate for anodic treatment of the stainless steel in order to reduce interfacial resistance may be established for a given electrolyte and temperature by configuring the sample of the stainless steel to be treated as the anode in a bath of electrolyte, establishing a potential difference between the anode and a counter electrode (as cathode) so as to pass a dc current of substantially constant current density through the electrolyte between the anode and electrode and using a range of current densities and treatment times. From measurements of the interfacial resistance, the corrosion potential Ecorr and corrosion current Icorr, a suitable operating regime can be determined. In practice, a suitable current density can be established by conducting experiments to determine current densities at which the interfacial resistance (as measured using the technique described above) is significantly reduced. For 316 stainless steel for instance, we have found that a marked reduction in interfacial resistance can be achieved using current densities of 20 mA.cm$^{-2}$ and upwards. For efficient energy usage, it is of course desirable to carry out the treatment at as low a current density as can be achieved while securing a significant reduction in interfacial resistance.

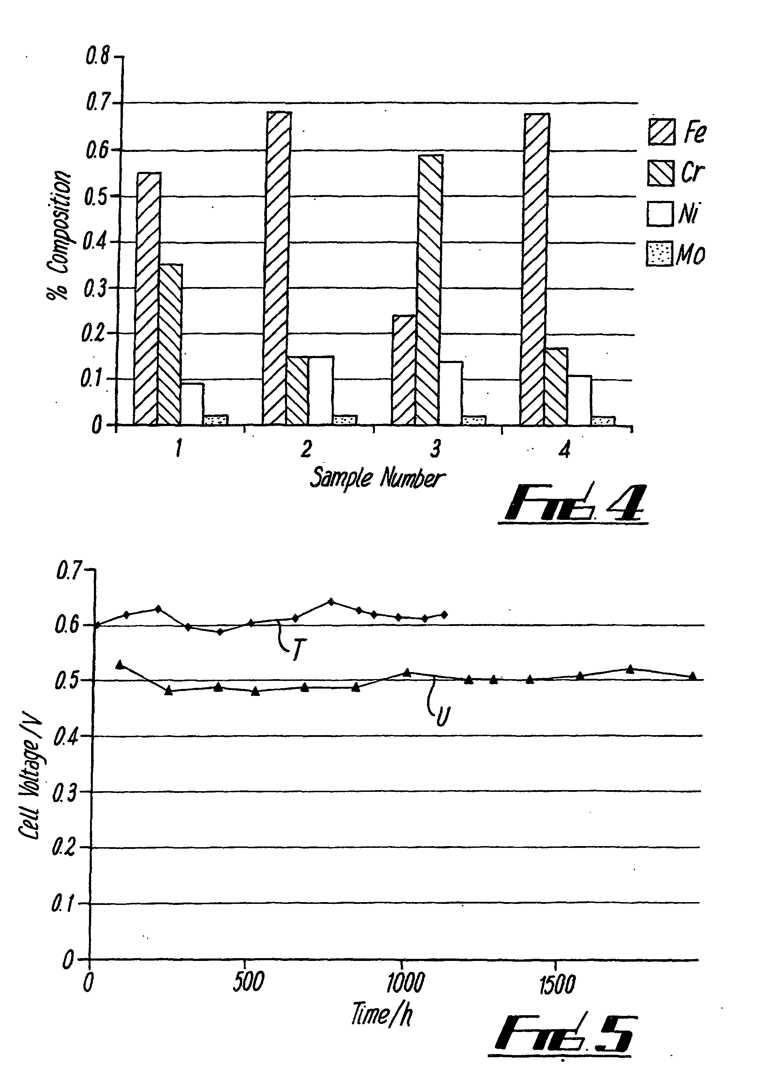

For a given electrolyte and temperature, a suitable treatment time may be be established by reference to graphical representations such as that illustrated in Figure 3 which illustrates treatment time against Ecorr and Icorr for treatment of 316 stainless steel carried out at room temperature using a current density of 25 mA.cm$^{-2}$ and an electrolyte comprising a 0.5M solution of sulphuric acid. The data for the curves in Figure 3 corresponds to that tabulated in Table 1 below in which the samples subjected to a current density of 25 mA.cm$^{-2}$ are identified by SS316(25).

Table 1 also includes measurements for the following samples of the same stainless steel:

SS316(U) - an untreated sample;
SS316(UG) - a sample which has been grit-blasted using 60/80 alumina but otherwise untreated;
SS316(TG) - a sample which has been grit-blasted using 60/80 alumina and has also been subjected to a current density of the specified magnitude and time;
SS316(100) - a sample which has been subjected to a current density of 100 mA.cm$^{-2}$ for 20 minutes.

Ecorr and Icorr were determined by a DC polarisation technique using the following procedure:
Polarisation was carried out in an EG&G (Elmer Perkin) flat cell containing 1N (0.5 mol) H$_2$SO$_4$ electrolyte and equipped with a SCE reference electrode and Pt/Rh counter electrode. With the working electrode in place, the cell temperature was set at 60°C and gently sparged with nitrogen gas and allowed to equilibriate for at least 15 minutes. The voltage drop between the working and counter electrode (open circuit potential) was measured every few minutes until the potential stabilises (± 2mV between successive readings). Potential scanning was effected from -0.5 to 1.0 V vs SCE at a sweep rate of 0.1mV.s$^{-1}$. From the data obtained, a plot of log current density vs potential, commonly referred to as a Tafel plot, yields the well-known "spiked" polarisation curve, the centre of the spike being the location at which the anodic and cathodic curves meet. This point is treated as the corrosion potential Ecorr. By extrapolation along each part of the curve at a potential not more than 30mV either side of Ecorr, a value for Icorr can be determined from the point of intersection of the tangents - see Principles and Prevention of Corrosion by Denny A Jones, 2nd Edition, published by Prentice Hall, Page 95 for details of the determination of Icorr.

Table 1

| Electrolyte: 0.5M sulphuric acid aqueous solution | | | | | |
|---|---|---|---|---|---|
| Sample | Current Density (mA.cm$^{-2}$) | Time (mins) | RI (m$\Omega$.cm$^{2)}$) | Ecorr (mV vs SCE) | Log [Icorr] (A.cm$^{-2}$) |
| SS316(25) | 25 | 1 | 13 | -0.2710 | -6.032 |
| SS316(25) | 25 | 2 | 12 | -0.0277 | -6.458 |
| SS316(25) | 25 | 4 | 13 | 0.0342 | -6.4884 |
| SS316(25) | 25 | 5 | 12 | 0.0685 | -6.2735 |
| SS316(25) | 25 | 6 | 15 | 0.1303 | -6.3196 |

Table 1   (continued)

| Electrolyte: 0.5M sulphuric acid aqueous solution | | | | | |
|---|---|---|---|---|---|
| Sample | Current Density (mA.cm$^{-2}$) | Time (mins) | RI (m$\Omega$.cm$^{2)}$) | Ecorr (mV vs SCE) | Log [Icorr] (A. cm$^{-2}$) |
| SS316(25) | 25 | 8 | 14 | -0.1598 | -5.9433 |
| SS316(25) | 25 | 10 | 13 | -0.3102 | -5.7863 |
| SS316(25) | 25 | 30 | 12 | -0.2379 | -5.855 |
| SS316(25) | 25 | 60 | 10 | -0.2674 | -5.7149 |
| SS316(U) | - | - | 64 | -0.316 | -4.946 |
| SS316(UG) | - | - | 19 | -3.299 | -5.7149 |
| SS316(TG) | 60 | 25 | 13 | -0.2893 | -6.136 |
| SS316(100) | 100 | 20 | 10 | NM | NM |

Comparing the SS316(25) and SS316(100) samples with SS316(U), it will be seen that the treatment results in a marked reduction in interfacial resistance $R_I$. Likewise, there is a marked reduction in interfacial resistance $R_I$ for the samples which have been grit-blasted but the difference in $R_I$ for SS316(UG) and SS316(TG) is only marginal. Also, it will be observed that the $R_I$ for SS316(25) when treated for 60 minutes is slightly superior to that for SS316 (TG). This suggests that there is nothing to be gained from mechanically roughening the stainless steel surface; however, we do not exclude the possibility of carrying out such roughening from the scope of the present invention.

Also, from Table 1, it will be seen that the interfacial resistance R, measured for SS316(100) is only marginally better than that obtained for the same sample when treated for 5 minutes at 25 mA.cm$^{-2}$. However, it will be noted that Ecorr and Icorr values obtained within a window of relatively short treatment times correspond to better corrosion resistance properties than for significantly longer treatment times - cf. SS316(25) when treated for 10 minutes with SS316(25) when treated for between 4 and 6 minutes.

Table 2 gives similar data to that of Figure 1 for the same stainless steel but using different electrolytes.

Table 2

| Electrolyte | Current Density (mA.cm$^{-2}$) | Time (mins) | RI (m$\Omega$.cm$^{2)}$) | Ecorr (mV vs SCE) | Log [Icorr] (A. cm$^{-2}$) |
|---|---|---|---|---|---|
| $H_3PO_4$ (M) | 100 | 20 | 41 | -0.3162 | -6.0904 |
| HCl (M) | 100 | 20 | 17 | -0.3451 | -4.826 |
| $HNO_3$ (M) | 100 | 20 | 15 | -0.03121 | -6.123 |
| $HNO_3$ (M) | 25 | 2 | 24 | - | - |
| $HNO_3$ (M) | 25 | 4 | 33 | - | - |
| $HNO_3$ (M) | 25 | 6 | 27 | - | - |
| $HNO_3$ (M) | 25 | 8 | 24 | - | - |
| $H_3PO_4$/ $H_2SO_4$ | 100 | 20 | 19 | - | - |

All electrolytes specified in Table 2 are 1M aqueous solutions of the acid specified. The mixed acid electrolyte ($H_3PO_4$/ $H_2SO_4$) comprises 1M aqueous solutions of each acid. Although HCl exhibits a reduction in interfacial resistance, it is not a preferred acid because of corrosion pitting issues.

As previously mentioned, the use of metal bipolar plates in fuel cells is seen as having many advantages over other materials, for instance: thin plates leading to low volume stacks; ease of pressing a flow field into the plate; and low cost metals and alloys are readily available in large quantities. One concern over the use of metals plates however is the issue of corrosion which can result in metal ions from the metal plates blocking active sites in the membrane in a PEM type fuel cell leading to increased cell resistances. Makkus et al (J. Power Sources, 86 (2000) 274) reported that the anode side of the fuel cell (i.e. the hydrogen side) containing metal bipolar plates, gives rise to a greater corrosion of the plate than the cathode (i.e. air ) side. Makkus et al also refers to passivation resulting in increased electrical as well as corrosion resistance.

To examine the effect of treating stainless steel in accordance with the present invention, operation of a PEM fuel cell was simulated by using an electrolyte of 1 mol dm$^{-3}$ sulphuric acid at 60°C and polarising a stainless steel test piece at the extremes of the fuel cell operation i.e. 0V vs SHE for the anode side. The simulation was carried out for treated and untreated test samples of the same 316 stainless steel and was operated for a number of hours. After such operation using each sample, the electrolyte was collected for chemical analysis. The treatment used in preparing the one sample for the simulation involved subjecting the sample to a current density of 25 mA.cm$^{-2}$ for 6 minutes in an aqueous electrolyte of 0.5 mole sulphuric acid per dm$^3$ initially at room temperature. The data from the anode side simulation is shown in Table 3 for the untreated sample (Sample 1) and the treated sample (Sample 2).

Table 3

| Sample # | Treatment time (hours) | Cr mg/litre | Fe mg/litre | Mn mg/litre | Mo mg/litre | Ni mg/litre |
|---|---|---|---|---|---|---|
| 1 | 50 | 1.8 | 4.3 | 0.14 | 0.3 | 2.1 |
| 2 | 72 | 0.06 | 0.49 | 0.02 | < 0.05 | 0.1 |

From Table 3, it will be seen that for the simulated cell using the treated sample there is a substantial reduction in the extent of corrosion, as evidenced by the much lower metal ion presence in the electrolyte.

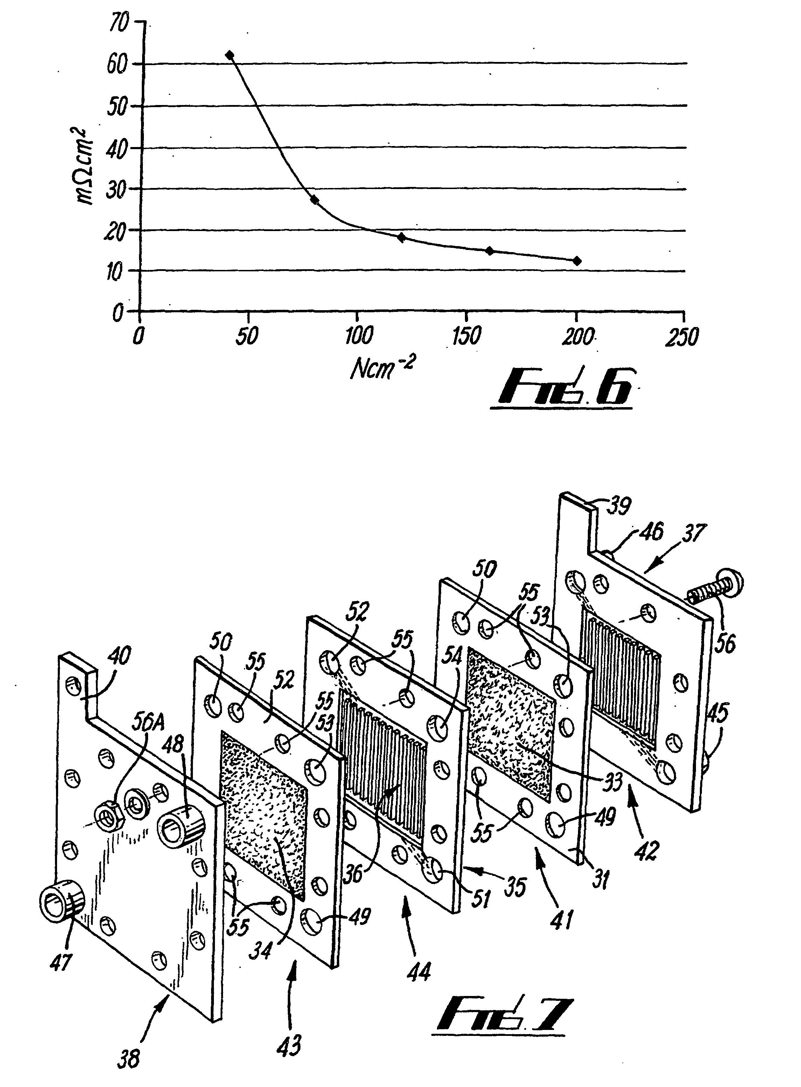

The anodic treatment of the stainless steel usually involves enrichment of the surface layer of the stainless steel in such a way that the iron to chromium content in the surface region of the treated steel (as measured using X ray photoelectron spectroscopy) is reduced. This is illustrated in Figure 4 for a number of samples of the same 316 stainless steel. Sample 4 represents the bulk composition of the 316 steel in terms of its iron, chromium, nickel and molybdenum constituents. Sample 1 represents a degreased specimen from which it will be seen that the iron content is substantially greater than the chromium content. Sample 2 represents a specimen which has been degreased and surface roughened by grit blasting. In this case, the iron content is even greater compared with the chromium content and is substantially representative of the bulk composition of the stainless steel corresponding to Sample 4. Sample 3 corresponds to a specimen subjected to anodic treatment in accordance with the invention and will be seen to have a surface composition in which the chromium content significant exceeds the iron content.

Figure 5 illustrates the benefits derived from the use of anodically treated stainless steel plates in a fuel cell. This Figure is a graphical representation comparing the longer term performance of a single cell PEM fuel cell equipped with treated stainless steel plates and one equipped with untreated stainless steel plates (graphs T and U respectively in Figure 5), the stainless steel plates in both cases being configured as field flow plates located on opposite sides (anode and cathode sides) of the membrane. The treatment applied to the plates involved subjecting them to a current density of 25 mA/cm$^2$ in a solution of 0.5 M sulphuric acid electrolyte for 6 minutes in the case of the anode-side plate and for 60 minutes in the case of the cathode-side plate. In the long term test of Figure 5, the following conditions were used:

hydrogen pressure 3 bar (g)
air pressure 3 bar (g)
hydrogen utilisation 70%
air utilisation 35%
cell temperature 50°C
humidification 50°C
compaction force 220 N/cm$^2$
current density 0.7 A/cm$^2$

The comparative long term data for untreated stainless steel comes from D. P. Davies, P. L. Adcock, M. Turpin and S. J. Rowen, J. Power Sources, 86 (2000) 237.

From Figure 5, it can be seen that significant improvement is secured in voltage output by using treated stainless steel plates without sacrificing durability.

The treatment of the stainless steel may be carried out at constant current or at constant voltage. Figure 6 illustrates interfacial resistance data obtained using the procedure described with reference to Figure 1 for a sample of the same 316 stainless steel as that referred to in Table 2 but treated in 0.5M sulphuric acid electrolyte for 10 minutes at an applied voltage of 1.8V vs SCE, i.e. substantially constant voltage against the reference electrode. At an applied pressure of 200 Ncm$^{-2}$, the interfacial resistance is approximately 12.5 mΩ.cm$^2$ compared with 64 mΩ.cm$^2$ for the untreated sample (see SS316(U) in Table 2).

In a typical production process, a number of sheets of stainless steel, e.g. 316 or 316L stainless steel, each has sets of features introduced into one or both major surfaces (e.g. by etching or pressing) in such a way that each set of the features serve as flow distribution channels for fluids in an electrochemical cell assembly such as a fuel cell stack. The fluids may be (but are not limited to) hydrogen, air, oxygen, water and/or methanol. An example of such a flow pattern is shown in Figure 7 to be described below. Once the sheet has been treated in accordance with the invention, it can be cut into smaller pieces each forming a plate provided with a set of fluid flow channels on one or each major face, each plate being dimensioned and configured for use in the fuel cell. In accordance with the invention, the stainless steel sheet is treated in such a way as to enhance the surface conductivity, preferably without reducing the corrosion resistance and, in some cases, increasing the corrosion resistance of the metal.

The treatment process usually comprises the following steps:

1. The sheet to be treated is first 'cleaned' using a degreasing solvent such as acetone, iso-propanol, trichloroethylene, or an alkaline based aqueous system.

2. The sheet is introduced into an aqueous treatment bath containing sulphuric acid, e.g. 1 mol dm$^{-3}$, at room temperature or other desired temperature. The treatment bath is equipped with counter electrodes made of suitable material (e.g. titanium coated with iridium dioxide or platinum) which may be in sheet or mesh form and the sheet to be treated is located between the two counter electrodes.

3. Electrical connections are made with both the stainless steel sheet workpiece and to the counter electrodes and a substantially constant dc current is passed between the counter electrodes and the workpiece. The current density is usually between 1 and 100 mA cm$^{-2}$ and is applied for a suitable time (usually between 1 minute to 2 hours), the current density and the time of application being determined experimentally in the light of treating samples of the stainless steel in the manner described previously.

4. After the current has been applied for the required time, the workpiece is disconnected from the electrical circuitry, removed from the bath and excess acid removed for example by suspending the workpiece over the bath for a time to allow excess acid to drain from the surface into the bath.

5. The treated sheet is then transported to a rinse bath containing deionised water, or deionised water made slightly alkaline with sodium carbonate or sodium hydroxide and after rinsing the sheet is dried in a clean environment. Drying may be performed by natural evaporation or by circulation of air at room or elevated temperature.

6. The dried sheet is cut into smaller plates compatible in size with the dimensions and configuration of the fuel stack into which the plates are to be incorporated as flow field plates and/or bipolar plates for instance.

In an alternative method, instead of dividing the stainless steel sheet into the individual plates after the treatment process, after being formed with the sets of fluid flow channel features, the stainless steel sheet may instead initially be separated (e.g. by cutting or etching) into plates of suitable dimensions and configuration for incorporation in the electrochemical cell. The individual plates so formed can then be individually treated in accordance with steps 1 to 5 above.

In another variation, the opposite faces of the stainless steel sheet or individual plates may be subjected to the treatment to differing extents. For example, each face may be treated with regard to the conditions to which it will be exposed in operation of the electrochemical cell. For example, in the case of a bipolar plate for a fuel cell, one face might be exposed to a fluid comprising hydrogen or methanol (the anode side) and the opposite face may be exposed to a fluid comprising oxygen (the cathode side). By treating the two faces differently, e.g. for different lengths of time, each face may be optimised according to the conditions that it will be exposed to in operation of the fuel cell. Thus, the above process may be modified at step 4 by terminating current flow between one face and the associated counter electrode after a first predetermined time interval appropriate for that face (e.g. the hydrogen or anode side). At that point, that side is disconnected and isolated whilst currrent flow between the opposite face and its associated counter electrode is continued until lapse of a second predetermined time interval.

Referring now to Figure 7, one application of the present invention is in the production of a fuel cell stack comprising ion-permeable membranes 31 and 32 which have cathode electrodes 33 and 34 respectively and anode electrodes (not shown), bonded to each of their major surfaces. Each membrane 31, 32 and its associated anode and cathode forms a fuel cell unit. A bipolar separator plate 35, provided with surface features 36, is disposed between ion-permeable membranes 31 and 32 in contact with the electrode surfaces thereof. Terminal plates 37 and 38, provided with tabs 39 and 40 for delivering electric current generated in the cell stack to an external circuit, are disposed adjacent membranes 31 and 32 respectively. In the illustrated embodiment, only one bipolar separator plate 35 is shown. In practice, there will usually be a plurality of bipolar separator plates each associated with adjacent pairs of fuel cell units.

In the stack, membrane 31 is held firmly between terminal plate 37 and bipolar plate 35 so as to form an oxidant gas chamber 41 and a fuel gas chamber 42. In like manner, membrane 32 is held firmly between terminal plate 38 and bipolar plate 35 so as to form an oxidant gas chamber 43 and a fuel gas chamber 44. Hydrogen fuel is supplied to the anodes in the fuel gas chambers 42 and 44 via fuel gas inlet conduit 45 and by-products removed via conduit 46. Oxidant gas is supplied to cathodes 33 and 34 in the oxidant gas chambers 41 and 43 via oxidant gas inlet conduit 47 and by-products removed via conduit 48. Openings 49 and 50 located in opposite comers of membranes 31 and 32 are aligned with hydrogen gas inlet and outlet conduits 45 and 46 and with openings 51 and 52 in bipolar plate 35 to facilitate passage of hydrogen fuel gas into the fuel chambers 42 and 44 and to remove by-products therefrom.

Openings, not shown, and openings 53 located in opposite corners of membranes 31 and 32 are aligned with oxidant inlet and outlet conduits 47 and 48 and with opening 54 and another not shown in bipolar plate 35 to facilitate passage of oxidant gas into the oxidant chambers 41 and 43 and to remove by-products therefrom.

End plates 37 and 38, membranes 31 and 32 and bipolar plate 35 are each provided with a plurality of openings 55 through which assembly tie-rods 56 (one only of which is illustrated in part) pass and engage with nuts 56A so that the fuel cell units and bipolar separator plates are clamped between the end plates 37 and 38. Though not illustrated, sealing gaskets will be interleaved with the membrane carrying plates 31 and 32, the bipolar plates 35 and the end plates 37 and 38 to seal the active interior of the fuel cell stack.

The end plates 37, 38 and/or the bipolar plate 35 are made of stainless steel which has been treated in accordance with the process of the invention so that the interfacial resistance between these plates and the adjacent membranes 31 is significantly reduced. In addition, the conduits and also the tabs 39 and 40 may be made of stainless steel treated in this way. In the case of the end plates 37, 38 only those faces which are presented towards the interior of the fuel cell stack need be treated in practice. However, for simplicity of treatment, the entire surface of the end plates may be so treated, including the borders which are not actually directly exposed to the interior of the fuel cell stack, and hence the strongly reducing/oxidising and high temperature conditions prevailing during operation of the fuel cell stack.

Although not shown, the stack is desirably provided with cooling means for dissipating at least part of the heat generated during operation. Such cooling means may be implemented by adapting one or more of the separator plates or inclusion of suitable elements within the stack so as to incorporate coolant passageways which are in heat exchange relation with the active interior of the fuel cell stack and through which a coolant fluid such as water or air can be passed, the interiors of the fluid coolant passageways being isolated from the interior of the fuel cell stack.

In a further embodiment of the present invention, a layer of diffusion material which is electrically conducting and porous, for example a carbon-coated paper or a graphite-impregnated polymer film, is disposed in the oxidant gas chambers 41 and 43 and/or in the fuel gas chambers 42 and 44. For example. the layer of diffusion material may be disposed between bipolar plate 35 and the adjacent electrode surfaces of membranes 31 and 32 and/or between the terminal plates 37 and 38 and the adjacent electrode surfaces of membranes 31 and 32.

## Claims

1. A method of manufacturing an electrochemical cell assembly or fuel cell stack in which at least one component which is exposed to the chemical environment during operation of the cell comprises a stainless steel component, said method comprising treating a surface of the stainless steel, prior to incorporation in the assembly or stack, with an electrical current while contacted by an electrolyte under conditions which reduce the interfacial resistance associated with said surface by a factor of at least 5% compared with the interfacial resistance prevailing prior to said treatment, and incorporating the so-treated stainless steel component in an electrochemical assembly or a fuel cell stack.

2. A method as claimed in Claim 1 in which the treatment is effective to reduce the ratio of iron to chromium content within the surface region of the stainless steel compared with the iron to chromium ratio prevailing prior to such treatment.

3. A method as claimed in Claim 1 in which the current density to which the stainless steel surface is subjected during at least a major part of said treatment is substantially constant.

4. A method as claimed in any one of Claims 1 to 3 in which the stainless steel is an austenitic steel.

5. A method as claimed in any one of Claims 1 to 3 in which the the substrate comprises a 300 series stainless steel.

6. A method as claimed in Claim 5 in which the substrate comprises a 316 stainless steel.

7. A method as claimed in Claim 5 in which the substrate comprises a 316L stainless steel.

8. A method as claimed in any one of the preceding claims in which the electrolyte includes at least one acid selected from the group comprising sulphuric acid, hydrochloric acid, nitric acid, chromic acid, oxalic acid and phosphoric acid.

**9.** A method as claimed in any one of Claims 1 to 8 in which the acid comprises sulphuric acid.

**10.** A method as claimed in Claim 9 in which the interfacial resistance of the stainless steel is reduced by a factor of at least 15% compared with the interfacial resistance prevailing prior to said treatment.

**11.** A method as claimed in Claim 9 in which the interfacial resistance of the stainless steel is reduced by a factor of at least 25% compared with the interfacial resistance prevailing prior to said treatment.

**12.** A method as claimed in Claim 9 in which the interfacial resistance of the stainless steel is reduced by a factor of at least 40% compared with the interfacial resistance prevailing prior to said treatment.

**13.** A method as claimed in any one of the preceding claims in which the treated surface of the stainless steel is coated with an electrically conductivity enhancing material following said treatment and prior to incorporation in the electrochemical cell assembly or stack.

**14.** A method as claimed in any one of Claims 1 to 12 in which the treated surface of the stainless steel is coated with titanium nitride, chromium nitride or an . electrocatalytically active material.

**15.** A method as claimed in any one of the preceding claims in which two or more surfaces of the stainless steel are so treated.

**16.** A method as claimed in Claim 15 in which the same treatment is applied at least to each major surface of the stainless steel.

**17.** A method as claimed in Claim 15 or 16 in which the treatment applied to one surface of the stainless steel is different from that applied to one or more other surfaces of the stainless steel.

**18.** A method as claimed in any one of the preceding claims in which the cell assembly or stack comprises two or more stainless steel components treated as aforesaid.

**19.** A method as claimed in any one of the preceding claims, the assembly or stack comprising bipolar plates, separator plates, flow field plates and/or current collecting plates, at least one of which comprises stainless steel plate treated as aforesaid.

**20.** A method as claimed in any one of the preceding claims in which the treatment is carried out using a current density in the range from 1 to 100 mA.cm$^{-2}$.

**21.** A method as claimed in any one of the preceding claims in which the treatment is carried out using a current density of at least 20 mA.cm$^{-2}$.

**22.** A method as claimed in any one of the preceding claims in which the treatment is carried out using a current density of up to 50 mA.cm$^{-2}$.

**23.** A method as claimed in any one of the preceding claims in which the treatment is carried out for a time interval of between 0.5 and 180 minutes.

**24.** A method as claimed in any one of the preceding claims in which the treatment is carried out for a time interval of at least 1 minute, preferably at least 2 minutes.

**25.** A method as claimed in any one of the preceding claims in which the treatment is carried out for a time interval of up to 60 minutes, e.g. up to 10 minutes.

**26.** A method as claimed in any one of the preceding claims in which the treatment is carried out for a time interval of between 3 and 7 minutes.

**27.** A method as claimed in any one of the preceding claims in which the treatment is carried out while the stainless steel is in the form of a sheet and in which the treated sheet is subsequently divided to form a number of plates for incorporation in one or more electrochemical cell assemblies.

28. A method as claimed in any one of Claims 1 to 27 in which the stainless steel is initially in the form of a sheet and in which the sheet is divided to form a number of plates before the treatment is applied to the individual plates.

29. A method as claimed in Claim 27 or 28 in which fluid flow channels are formed in the sheet before such division into plates is effected.

30. A method of manufacturing an electrochemical cell assembly or fuel cell stack in which at least one plate which is exposed to the chemical environment during operation of the cell comprises an austenitic stainless steel plate, said method comprising treating a surface of the stainless steel, prior to incorporation in the assembly or stack, in accordance with the method of Claim 1 using an electrical current having a current density in the range of 20 mA. cm$^{-2}$ to 100 mA.cm$^{-2}$ for a time interval of 1 to 10 minutes while in contact with an electrolyte containing sulphuric acid under conditions which reduce the interfacial resistance associated with said surface and reduce the ratio of iron content to chromium content at the surface of the stainless steel, the stainless steel thereafter being incorporated in the cell assembly or fuel cell stack in the form of a plate.

31. A method as claimed in Claim 30 in which prior to treatment the chromium content at the surface of the stainless steel is less than than the iron content and in which following treatment the chromium content at the surface of the stainless steel exceeds the iron content.

32. An electrochemical cell assembly manufactured by the method of any one of Claims 1 to 31.

33. A fuel cell assembly manufactured by the method of any one of Claims 1 to 31.

34. A fuel cell assembly as claimed in Claim 33, being a PEM fuel cell, an alkaline fuel cell, a phosphoric acid fuel cell, a direct methanol fuel cell, a molten carbonate fuel cell or a solid oxide fuel cell.

35. An electrochemical cell including bipolar plates, separator plates, flow field plates and/or current collecting plates, at least one of which is constituted by an anodically treated plate of stainless steel having reduced interfacial resistance following treatment in accordance with the method of any one of Claims 1 to 29.

36. A fuel cell plate formed with fluid flow channels, the plate comprising a stainless steel which, prior to incorporation in the fuel cell, has been treated by the method of any one of Claims 1 to 29.

37. A fuel cell stack comprising:

   a) a plurality of fuel cell units each of which contains a proton-exchange membrane separating the cell into anolyte and catholyte chambers and provided with an anode and a cathode on opposite sides thereof;
   b) a separator plate, flow field plate or bipolar plate disposed between adjacent cell units;
   c) current-collecting means comprising a pair of plates located one at each end of the stack;
   d) means for feeding fuel to the anolyte chambers of the stack; and
   e) means for feeding an oxygen-containing gas to the catholyte chambers of the stack;

   at least one of said plates being a stainless steel plate a surface of which, prior to incorporation of the plate into the stack, has been treated by the method of any one of Claims 1 to 29.

38. A method of preparing a stainless steel component for incorporation in an electrochemical cell assembly or fuel cell stack, comprising treating a surface of at least one stainless steel component which is exposed to the chemical environment during operation of the cell, prior to incorporation in the assembly or stack, with an electrical current while contacted by an electrolyte under conditions which reduce the interfacial resistance associated with said surface, coating the treated surface of the component with an electrically conductive material and incorporating the so-treated stainless steel component in an electrochemical assembly or a fuel cell stack..

39. A method of preparing a stainless steel component for incorporation in an electrochemical cell assembly or fuel cell stack, comprising treating a surface of at least one stainless steel component which is exposed to the chemical environment during operation of the cell, prior to incorporation in the assembly or stack, with an electrical current while contacted by an electrolyte under conditions which reduce the interfacial resistance associated with said surface, coating the treated surface with titanium nitride or chromium nitride or an electrocatalytically active material and and incorporating the so-treated stainless steel component in an electrochemical assembly or a fuel cell stack.

**40.** A method as claimed in Claim 39 in which the treated surface is coated with an electrocatalytically-active material selected from the group comprising: one or more platinum group metals or oxides thereof, cerium or or an oxide thereof; ruthenium or an oxide thereof; ruthenium oxide and a non-noble metal oxide; mixtures of RuO2 with at least one of TiO2, SnO2, IrO2, PtO, Sb2O3, Ta2O5, PdO, CeO2, Co3O4, and and incorporating the so-treated stainless steel component in an electrochemical assembly or a fuel cell stack.

**41.** An electrochemical cell assembly or fuel cell stack incorporating a stainless steel component which is exposed to the chemical environment within the cell during operation, the component being prepared in accordance with the method of any one of Claims 38 to 40.

**Patentansprüche**

**1.** Verfahren zum Herstellen einer elektrochemischen Zellenanordnung oder eines Brennstoffzellenpakets, bei der/ dem zumindest eine Komponente, die während des Betriebs der Zelle der chemischen Umgebung ausgesetzt ist, eine rostfreie Stahlkomponente aufweist, welches Verfahren aufweist: Behandeln einer Oberfläche des rostfreien Stahls, vor dem Einsetzen in die Anordnung oder das Paket, mit einem elektrischen Strom, während sie in Berührung mit einem Elektrolyten ist, unter Bedingungen, die den Grenzflächenwiderstand, der mit der Oberfläche assoziiert ist, um einen Faktor von zumindest 5% im Vergleich mit dem vor dieser Behandlung vorherrschenden Grenzflächenwiderstand herabsetzen, und Einsetzen der so behandelten rostfreien Stahlkomponente in eine elektrochemische Anordnung oder ein Brennstoffzellenpaket.

**2.** Verfahren nach Anspruch 1, bei dem die Behandlung wirksam ist zum Verringern des Verhältnisses von Eisen- zu Chromgehalt innerhalb des Oberflächenbereiches des rostfreien Stahls, verglichen mit dem vor einer derartigen Behandlung vorherrschenden Eisen- zu Chromverhältnis.

**3.** Verfahren nach Anspruch 1, bei dem die Stromdichte, der die rostfreie Stahloberfläche zumindest eines Hauptteils dieser Behandlung unterworfen ist, im Wesentlichen konstant ist.

**4.** Verfahren nach einem der Ansprüche 1 bis 3, bei dem der rostfreie Stahl ein austenitischer Stahl ist.

**5.** Verfahren nach einem der Ansprüche 1 bis 3, bei dem das Substrat einen rostfreien Stahl der Serie 300 aufweist.

**6.** Verfahren nach Anspruch 5, bei dem das Substrat einen rostfreien 316-Stahl aufweist.

**7.** Verfahren nach Anspruch 5, bei dem das Substrat einen rostfreien 316L-Stahl aufweist.

**8.** Verfahren nach einem der vorhergehenden Ansprüche, bei dem der Elektrolyt zumindest eine Säure enthält, die ausgewählt ist aus der Gruppe enthaltend Schwefelsäure, Salzsäure, Salpetersäure, Chromsäure, Oxalsäure und Phosphorsäure.

**9.** Verfahren nach einem der Ansprüche 1 bis 8, bei dem die Säure Schwefelsäure aufweist.

**10.** Verfahren nach Anspruch 9, bei dem der Grenzflächenwiderstand des rostfreien Stahls um einen Faktor von zumindest 15% verglichen mit dem vor der Behandlung vorherrschenden Grenzflächenwiderstand herabgesetzt ist.

**11.** Verfahren nach Anspruch 9, bei dem der Grenzflächenwiderstand des rostfreien Stahls um einen Faktor von zumindest 25% verglichen mit dem vor der Behandlung vorherrschenden Grenzflächenwiderstand herabgesetzt ist.

**12.** Verfahren nach Anspruch 9, bei dem der Grenzflächenwiderstand des rostfreien Stahls um einen Faktor von zumindest 40% verglichen mit dem vor dieser Behandlung vorherrschenden Grenzflächenwiderstand herabgesetzt ist.

**13.** Verfahren nach einem der vorhergehenden Ansprüche, bei dem die behandelte Oberfläche des rostfreien Stahls mit einem die elektrische Leitfähigkeit erhöhenden Material beschichtet wird, folgend dieser Behandlung und vor dem Einsetzen in die elektrochemische Zellenanordnung oder das Paket.

**14.** Verfahren nach einem der Ansprüche 1 bis 12, bei dem die behandelte Oberfläche des rostfreien Stahls mit Titannitrid, Chromnitrid oder einem elektrokatalytisch aktiven Material beschichtet wird.

15. Verfahren nach einem der vorhergehenden Ansprüche, bei dem zwei oder mehr Oberflächen des rostfreien Stahls so behandelt werden.

16. Verfahren nach Anspruch 15, bei dem dieselbe Behandlung bei zumindest jeder Hauptfläche des rostfreien Stahls angewendet wird.

17. Verfahren nach Anspruch 15 oder 16, bei dem die auf eine Oberfläche des rostfreien Stahls angewendete Behandlung sich von der unterscheidet, die bei einer oder mehr anderen Oberflächen des rostfreien Stahls angewendet wird.

18. Verfahren nach einem der vorhergehenden Ansprüche, bei dem die Zellenanordnung oder das Paket zwei oder mehr rostfreie Stahlkomponenten aufweist, die wie vorgenannt behandelt wurden.

19. Verfahren nach einem der vorhergehenden Ansprüche, bei dem die Anordnung oder das Paket Bipolarplatten, Separatorplatten, Strömungsfeldplatten und/oder Stromkollektorplatten aufweist, von denen mindestens eine eine rostfreie Stahlplatte aufweist, die wie vorgenannt behandelt ist.

20. Verfahren nach einem der vorhergehenden Ansprüche, bei dem die Behandlung unter Verwendung einer Stromdichte im Bereich von 1 bis 100 mA·cm$^{-2}$ durchgeführt wird.

21. Verfahren nach einem der vorhergehenden Ansprüche, bei dem die Behandlung unter Verwendung einer Stromdichte von zumindest 20 mA·cm$^{-2}$ durchgeführt wird.

22. Verfahren nach einem der vorhergehenden Ansprüche, bei dem die Behandlung unter Verwendung einer Stromdichte von bis zu 50 mA·cm$^{-2}$ durchgeführt wird.

23. Verfahren nach einem der vorhergehenden Ansprüche, bei dem die Behandlung während eines Zeitraums von zwischen 0,5 und 180 Minuten durchgeführt wird.

24. Verfahren nach einem der vorhergehenden Ansprüche, bei dem die Behandlung während eines Zeitraums von zumindest einer Minute, vorzugsweise zumindest 2 Minuten durchgeführt wird.

25. Verfahren nach einem der vorhergehenden Ansprüche, bei dem die Behandlung während eines Zeitraums von bis zu 60 Minuten, z.B. bis zu 10 Minuten durchgeführt wird.

26. Verfahren nach einem der vorhergehenden Ansprüche, bei dem die Behandlung während eines Zeitraums von zwischen 3 und 7 Minuten durchgeführt wird.

27. Verfahren nach einem der vorhergehenden Ansprüche, bei dem die Behandlung durchgeführt wird, während der rostfreie Stahl in der Form eines Blattes ist, und bei dem das behandelte Blatt nachfolgend geteilt wird, um eine Anzahl von Platten für das Einsetzen in eine oder mehr elektrochemische Zellenanordnungen zu bilden.

28. Verfahren nach einem der Ansprüche 1 bis 27, bei dem der rostfreie Stahl anfänglich in der Form eines Blattes ist und bei dem das Blatt geteilt wird, um eine Anzahl von Platten zu bilden, bevor die Behandlung bei den individuellen Platten durchgeführt wird.

29. Verfahren nach Anspruch 27 oder 28, bei dem Fluidströmungskanäle in dem Blatt gebildet werden, bevor eine derartige Teilung in Platten bewirkt wird.

30. Verfahren zum Herstellen einer elektrochemischen Zellenanordnung oder eines Brennstoffzellenpakets, bei der/dem zumindest eine Platte, die während des Betriebs der Zelle der chemischen Umgebung ausgesetzt ist, eine austenitische rostfreie Stahlplatte aufweist, welches Verfahren aufweist: Behandeln einer Oberfläche des rostfreien Stahls, vor dem Einsetzen in die Anordnung oder das Paket, gemäß dem Verfahren nach Anspruch 1 unter Verwendung eines elektrischen Stroms mit einer Stromdichte in dem Bereich von 20 mA·cm$^{-2}$ bis 100 mA·cm$^{-2}$ während einer Zeitdauer von 1 bis 10 Minuten, während sie in Kontakt mit einem Schwefelsäure enthaltenden Elektrolyten unter Bedingungen ist, die den Grenzflächenwiderstand, der mit dieser Oberfläche assoziiert ist, herabsetzen und das Verhältnis von Eisengehalt zu Chromgehalt and der Oberfläche des rostfreien Stahls herabsetzen, wobei der rostfreie Stahl danach in die Zellenanordnung oder das Brennstoffzellenpaket in der Form einer Platte eingesetzt wird.

31. Verfahren nach Anspruch 30, bei dem vor der Behandlung der Chromgehalt an der Oberfläche des rostfreien Stahls geringer als der Eisengehalt ist, und bei dem nachfolgend der Behandlung der Chromgehalt an der Oberfläche des rostfreien Stahls den Eisengehalt übersteigt.

32. Elektrochemische Zellenanordnung, die nach dem Verfahren nach einem der Ansprüche 1 bis 31 hergestellt ist.

33. Brennstoffzellenanordnung, die nach dem Verfahren nach einem der Ansprüche 1 bis 31 hergestellt ist.

34. Brennstoffzellenanordnung nach Anspruch 33, die eine PEM-Brennstoffzelle, eine Alkali-Brennstoffzelle, eine Phosphorsäure-Brennstoffzelle, eine Direktmethanol-Brennstoffzelle, eine Schmelzkarbonat-Brennstoffzelle oder eine Festoxid-Brennstoffzelle ist.

35. Elektrochemische Zelle enthaltend Bipolarplatten, Separatorplatten, Strömungsfeldplatten und/oder Stromkollektorplatten, von denen zumindest eine durch eine anodisch behandelte Platte aus rostfreiem Stahl mit herabgesetztem Grenzflächenwiderstand folgend der Behandlung gemäß dem Verfahren nach einem der Ansprüche 1 bis 29 gebildet ist.

36. Brennstoffzellenplatte, die mit Fluidströmungskanälen ausgebildet ist, welche Platte einen rostfreien Stahl aufweist, der vor dem Einsetzen in die Brennstoffzelle nach dem Verfahren nach einem der Ansprüche 1 bis 29 behandelt wurde.

37. Brennstoffzellenpaket, welches aufweist:

a) mehrere Brennstoffzelleneinheiten, von denen jede eine Protonenaustauschmembran enthält, die die Zelle in eine Anolyt- und eine Katolyt-Kammer trennt und mit einer Anode und einer Kathode an entgegengesetzten Seiten hiervon versehen ist;

b) eine Separatorplatte, Strömungsfeldplatte oder Bipolarplatte, die zwischen benachbarten Zelleneinheiten angeordnet ist;

c) Stromsammelmittel, die ein Paar von Platten aufweisen, von denen sich eine an jedem Ende des Pakets befindet;

d) Mittel zum Zuführen von Brennstoff zu den Anolytkammern des Pakets; und

e) Mittel zum Zuführen eines sauerstoffhaltigen Gases zu den Katolytkammern des Pakets; wobei zumindest eine der Platten eine rostfreie Stahlplatte ist, von der eine Oberfläche vor dem Einsetzen der Platte in das Paket nach dem Verfahren nach einem der Ansprüche 1 bis 29 behandelt wurde.

38. Verfahren zum Herstellen einer rostfreien Stahlkomponente zum Einsetzen in eine elektrochemische Zellenanordnung oder ein Brennstoffzellenpaket, aufweisend die Behandlung einer Oberfläche von zumindest einer rostfreien Stahlkomponente, die während des Betriebs der Zelle der chemischen Umgebung ausgesetzt wird, vor dem Einsetzen in die Anordnung oder das Paket, mit einem elektrischen Strom, während sie in Berührung mit einem Elektrolyten ist, unter Bedingungen, die den Grenzflächenwiderstand, der mit dieser Oberfläche assoziiert ist, herabsetzen, Beschichten der behandelten Oberfläche der Komponente mit einem elektrisch leitenden Material und Einsetzen der so behandelten rostfreien Stahlkomponente in eine elektrochemische Anordnung oder ein Brennstoffzellenpaket.

39. Verfahren zum Herstellen einer rostfreien Stahlkomponente zum Einsetzen in eine elektrochemische Zellenanordnung oder ein Brennstoffzellenpaket, aufweisend die Behandlung einer Oberfläche von zumindest einer rostfreien Stahlkomponente, die während des Betriebs der Zelle der chemischen Umgebung ausgesetzt ist, vor dem Einsetzen in die Anordnung oder das Paket, mit einem elektrischen Strom, während sie in Berührung mit einem Elektrolyten unter Bedingungen ist, die den Grenzflächenwiderstand, der mit dieser Oberfläche assoziiert ist, herabsetzen, Beschichten der behandelten Oberfläche mit Titannitrid oder Chromnitrid oder einem elektrokatalytisch aktiven Material, und Einsetzen der so behandelten rostfreien Stahlkomponente in eine elektrochemische Anordnung oder ein Brennstoffzellenpaket.

40. Verfahren nach Anspruch 39, bei dem die behandelte Oberfläche mit einem elektrokatalytisch aktiven Material beschichtet wird, das ausgewählt ist aus der Gruppe, welche aufweist: ein oder mehr Platingruppenmetalle oder Oxide hiervon, Cer oder ein Oxid hiervon; Ruthenium oder ein Oxid hiervon; Rutheniumoxid oder ein Oxid eines unedlen Metalls; Mischungen von RuO2 mit zumindest einem von TiO2, SnO2, IrO2, PtO, Sb2O3, Ta2O5, PdO, CeO2, Co3O4, und Einsetzen der so behandelten rostfreien Stahlkomponente in eine elektrochemische Anordnung oder ein Brennstoffzellenpaket.

41. Elektrochemische Zellenanordnung oder Brennstoffzellenpaket, enthaltend eine rostfreie Stahlkomponente, die während des Betriebs der chemischen Umgebung innerhalb der Zelle ausgesetzt ist, welche Komponente gemäß dem Verfahren nach einem der Ansprüche 38 bis 40 hergestellt ist.

**Revendications**

1. Procédé de préparation d'un assemblage de cellule électrochimique ou d'un empilement de cellules combustibles, dans lequel au moins un composant qui est exposé à l'environnement chimique pendant le fonctionnement de la cellule, comprend un composant en acier inoxydable, ledit procédé comprenant le traitement d'une surface de l'acier inoxydable, avant l'incorporation à l'assemblage ou à l'empilement, à l'aide d'un courant électrique alors qu'il est contact avec un électrolyte dans des conditions qui réduisent la résistance interfaciale associée à ladite surface, d'un facteur d'au moins 5% par comparaison à la résistance interfaciale présentée avant ledit traitement, et l'incorporation du composant en acier inoxydable ainsi traité dans un assemblage électrochimique ou un empilement de cellules combustibles.

2. Procédé selon la revendication 1, dans lequel le traitement est efficace pour réduire le rapport de la teneur en fer à la teneur en chrome dans la région de surface de l'acier inoxydable par comparaison au rapport fer à chrome présent avant un tel traitement.

3. Procédé selon la revendication 1, dans lequel la densité de courant à laquelle la surface de l'acier inoxydable est soumise pendant au moins la majeure partie dudit traitement est sensiblement constante.

4. Procédé selon l'une quelconque des revendications 1 à 3, dans lequel l'acier inoxydable et un acier austénitique.

5. Procédé selon l'une quelconque des revendications 1 à 3, dans lequel le substrat comprend un acier inoxydable de la série 300.

6. Procédé selon la revendication 5, dans lequel le substrat comprend un acier inoxydable de la série 316.

7. Procédé selon la revendication 5, dans lequel le substrat comprend un acier inoxydable de la série 316L.

8. Procédé selon l'une quelconque des revendications précédentes, dans lequel l'électrolyte comprend au moins un acide choisi parmi le groupe comprenant l'acide sulfurique, l'acide chlorhydrique, l'acide nitrique, l'acide chromique, l'acide oxalique et de l'acide phosphorique.

9. Procédé selon l'une quelconque des revendications 1 à 8, dans lequel l'acide comprend l'acide sulfurique.

10. Procédé selon la revendication 9, dans lequel la résistance interfaciale de l'acier inoxydable est réduite d'un facteur d'au moins 15% par comparaison à la résistance interfaciale présente avant ledit traitement.

11. Procédé selon la revendication 9, dans lequel la résistance interfaciale de l'acier inoxydable est réduite d'un facteur d'au moins 25% par comparaison à la résistance interfaciale présente avant ledit traitement.

12. Procédé selon la revendication 9, dans lequel la résistance interfaciale de l'acier inoxydable est réduite d'un facteur d'au moins 40% par comparaison à la résistance interfaciale présente avant ledit traitement.

13. Procédé selon l'une quelconque des revendications précédentes, dans lequel la surface traitée de l'acier inoxydable est revêtue d'un matériau augmentant la conductivité électrique, après ledit traitement et avant l'incorporation dans l'assemblage ou l'empilement de cellules électrochimiques.

14. Procédé selon l'une quelconque des revendications 1 à 12, dans lequel la surface traitée de l'acier inoxydable est revêtue de nitrure de titane, de nitrure de chrome ou d'un matériau actif de manière électrocatalytique.

15. Procédé selon l'une quelconque des revendications précédentes, dans lequel deux surfaces ou plus de l'acier inoxydable sont ainsi traitées.

16. Procédé selon la revendication 15, dans lequel le même traitement est appliqué à au moins chacune des surfaces principales de l'acier inoxydable.

17. Procédé selon la revendication 15 ou 16, dans lequel le traitement appliqué à une surface de l'acier inoxydable est différent de celui appliqué à une autre ou plusieurs autres surfaces de l'acier inoxydable.

18. Procédé selon l'une quelconque des revendications précédentes, dans lequel l'assemblage ou l'empilement de cellules comprend deux composants en acier inoxydable ou plus, traités comme indiqué précédemment.

19. Procédé selon l'une quelconque des revendications précédentes, dans lequel l'assemblage ou l'empilement comprend des plaques bipolaires, des plaques de séparation, des plaques de champ de flux et/ou des plaques de collecte du courant, dont au moins une comprend une plaque en acier inoxydable traitée comme indiqué précédemment.

20. Procédé selon l'une quelconque des revendications précédentes, dans lequel le traitement est réalisé à l'aide d'une densité de courant située dans l'intervalle allant de 1 à 100 mA.cm$^{-2}$.

21. Procédé selon l'une quelconque des revendications précédentes, dans lequel le traitement est réalisé à l'aide d'une densité de courant d'au moins 20 mA.cm$^{-2}$.

22. Procédé selon l'une quelconque des revendications précédentes, dans lequel le traitement est réalisé à l'aide d'une densité de courant de jusqu'à 50 mA.cm$^{-2}$.

23. Procédé selon l'une quelconque des revendications précédentes, dans lequel le traitement est réalisé pendant une période située dans l'intervalle allant de 0,5 à 180 minutes.

24. Procédé selon l'une quelconque des revendications précédentes, dans lequel le traitement est réalisé pendant une période d'au moins 1 minute, de préférence au moins 2 minutes.

25. Procédé selon l'une quelconque des revendications précédentes, dans lequel le traitement est réalisé pendant une période de jusqu'à 60 minutes, par exemple jusqu'à 10 minutes.

26. Procédé selon l'une quelconque des revendications précédentes, dans lequel le traitement est réalisé pendant une période située dans l'intervalle allant de 3 à 7 minutes.

27. Procédé selon l'une quelconque des revendications précédentes, dans lequel le traitement est réalisé alors que l'acier inoxydable a la forme d'une tôle et dans lequel la tôle traitée est ensuite divisée pour former un certain nombre de plaques à incorporer dans un ou plusieurs assemblages de cellules électrochimiques.

28. Procédé selon l'une quelconque des revendications 1 à 27, dans lequel l'acier inoxydable est initialement sous la forme d'une tôle et dans lequel la tôle est divisée pour former un certain nombre de plaques, avant de réaliser le traitement aux plaques individuelles.

29. Procédé selon la revendication 27 ou 28, dans lequel les canaux d'écoulement de fluide sont formés dans la tôle avant d'effectuer la division en plaques.

30. Procédé de préparation d'un assemblage de cellule électrochimique ou d'un empilement de cellules combustibles, dans lequel au moins une plaque qui est exposée à l'environnement chimique pendant le fonctionnement de la cellule, comprend une plaque en acier inoxydable austénitique, ledit procédé comprenant le traitement d'une surface de l'acier inoxydable, avant l'incorporation à l'assemblage ou à l'empilement, selon le procédé de la revendication 1 à l'aide d'un courant électrique ayant une densité de courant située dans l'intervalle allant de 20 mA.cm$^{-2}$ à 100 mA.cm$^{-2}$ pendant une période allant de 1 à 10 minutes, alors qu'il est en contact avec un électrolyte contenant de l'acide sulfurique, dans des conditions qui réduisent la résistance interfaciale associée à ladite surface, et qui réduisent le rapport de la teneur en fer à la teneur en chrome à la surface de l'acier inoxydable, l'acier inoxydable étant ensuite incorporé dans l'assemblage de cellule ou l'empilement de cellules combustibles sous la forme d'une plaque.

31. Procédé selon la revendication 30, dans lequel avant le traitement, la teneur en chrome à la surface de l'acier inoxydable est inférieure à la teneur en fer et dans lequel après le traitement, la teneur en chrome à la surface de l'acier inoxydable dépasse la teneur en fer.

32. Assemblage de cellule électrochimique, préparé par le procédé selon l'une quelconque des revendications 1 à 31.

33. Assemblage de cellule combustible, préparé par le procédé selon l'une quelconque des revendications 1 à 31.

34. Assemblage de cellule combustible selon la revendication 33, qui est une cellule combustible PEM, une cellule combustible alcaline, une cellule combustible à l'acide phosphorique, une cellule combustible au méthanol direct, une cellule combustible au carbonate fondu ou une cellule combustible à oxyde solide.

35. Cellule électrochimique comprenant des plaques bipolaires, des plaques de séparation, des plaques de champ de flux et/ou des plaques de collecte du courant, dont au moins une est constituée d'une plaque traitée de manière anodique en acier inoxydable ayant une résistance interfaciale réduite après traitement selon le procédé de l'une quelconque des revendications 1 à 29.

36. Plaque de cellule combustible formée avec des canaux d'écoulement de fluide, la plaque comprenant un acier inoxydable qui, avant incorporation dans la cellule combustible, a été traité par le procédé de l'une quelconque des revendications 1 à 29.

37. Empilement de cellules combustibles comprenant :

a) une série d'unités de cellule combustible, dont chacune contient une membrane d'échange de proton séparant la cellule en chambres d'anolyte et de catholyte et munie d'un anode et d'une cathode sur ses faces opposées ;
b) une plaque de séparation, une plaque de champ de flux ou une plaque bipolaire disposée entre les unités adjacentes de cellule ;
c) des moyens de collecte du courant, comprenant une paire de plaques localisées à chaque extrémité de l'empilement ;
d) des moyens d'alimentation du combustible aux chambres d'anolyte de l'empilement, et
e) des moyens d'alimentation en un gaz oxygéné aux chambres de catholyte de l'empilement, dont au moins une desdits plaques est une plaque en acier inoxydable dont la surface a été traitée, avant incorporation de celle-ci dans l'empilement, par le procédé de l'une quelconque des revendications 1 à 29.

38. Procédé de préparation d'un composant en acier inoxydable à incorporer dans un assemblage de cellule électrochimique ou un empilement de cellules combustibles, comprenant le traitement d'une surface d'au moins un composant en acier inoxydable, qui est exposé à l'environnement chimique pendant le fonctionnement de la cellule, avant l'incorporation à l'assemblage ou à l'empilement, à l'aide d'un courant électrique alors qu'il est contact avec un électrolyte dans des conditions qui réduisent la résistance interfaciale associée à ladite surface, le revêtement de la surface traitée du composant avec un matériau conducteur de l'électricité et l'incorporation du composant en acier inoxydable ainsi traité dans un assemblage électrochimique ou un empilement de cellules combustibles.

39. Procédé de préparation d'un composant en acier inoxydable à incorporer dans un assemblage de cellule électrochimique ou un empilement de cellules combustibles, comprenant le traitement d'une surface d'au moins un composant en acier inoxydable, qui est exposé à l'environnement chimique pendant le fonctionnement de la cellule, avant l'incorporation à l'assemblage ou à l'empilement, à l'aide d'un courant électrique alors qu'il est contact avec un électrolyte dans des conditions qui réduisent la résistance interfaciale associée à ladite surface, le revêtement de la surface traitée avec du nitrure de titane ou du nitrure de chrome ou un matériau actif de manière électrocatalytique, et l'incorporation du composant en acier inoxydable ainsi traité dans un assemblage électrochimique ou un empilement de cellules combustibles.

**40.** Procédé selon la revendication 39, dans lequel la surface traitée est revêtue d'un matériau actif de manière électrocatalytique choisi parmi le groupe comprenant un ou plusieurs métaux du groupe du platine ou leurs oxydes, le cérium ou un oxyde de celui-ci ; le ruthénium ou un oxyde de celui-ci ; l'oxyde de ruthénium et un oxyde de métal non noble ; des mélanges de $RuO_2$ avec au moins un de $TiO_2$, $SnO_2$, $IrO_2$, PtO, $Sb_2O_3$, $Ta_2O_5$, PdO, $CeO_2$, $Co_3O_4$ et l'incorporation du composant en acier inoxydable ainsi traité dans un assemblage électrochimique ou un empilement de cellules combustibles.

**41.** Assemblage de cellule électrochimique ou empilement de cellules combustibles comprenant un composant en acier inoxydable, qui est exposé à l'environnement chimique dans la cellule pendant le fonctionnement, le composant étant préparé selon le procédé de l'une quelconque des revendications 38 à 40.

_Fig.1_

_Fig.2_

*FIG.3*

EP 1 305 836 B1

*FIG. 4*

*FIG. 5*

FIG.6

FIG.7